# EUROPEAN PATENT SPECIFICATION

(11) **EP 3 597 505 B1**
(45) Date of publication and mention of the grant of the patent: **09.11.2022**
(21) Application number: 19183581.8
(22) Date of filing: 01.07.2019
(51) Int. Cl.: B62B 5/00, A61G 1/02

(54) **TROLLEY**
TRANSPORTWAGEN
CHARIOT

(30) Priority: 09.07.2018 NL 2021273
(43) Date of publication of application: 22.01.2020
(73) Proprietor: Matador Exploitatie B.V., 5268 AS Helvoirt (NL)
(72) Inventor: BELGERS, Paul Anton Gerard Marie, 5263 GP Vught (NL)
(74) Representative: Patentwerk B.V.

(56) References cited:
- DE-U1- 7 624 635
- DE-U1- 9 110 586
- FR-A1- 2 775 645
- GB-A- 1 535 395
- US-A- 3 289 219
- US-A- 4 767 148

## Description

The invention relates to a wheeled carrying structure with collapsible undercarriage and to a method for moving a carrying frame of this kind between a floor at a lower level and a loading area at a higher level. Such a wheeled carrying structure is known from the GB 1 535 395 A.

In the prior art, for example wheeled stretchers are known, which are provided with a collapsible undercarriage. A stretcher of this kind can be moved relatively easily out of or into an ambulance, wherein the carrying surface on which a patient may lie remains more or less at the same height. This has the advantage that the load carried by the stretcher does not have to be lifted or at least only a limited vertical movement is required. This is not only comfortable for a patient, it also requires less effort from the persons who have to move the stretcher into and/or out of the ambulance. Because it is not the intention that the carrying frame collapses spontaneously while this is not required (for example during movement of the stretcher at a distance from the ambulance), the collapsible undercarriage of the stretcher is provided with a locking mechanism that prevents spontaneous collapse. This locking mechanism can for example be locked and unlocked by an operating handle connected to the stretcher. A drawback of the existing wheeled carrying structures is that they may become unlocked at a desired moment and that the operation of unlocking must be operated precisely at a moment when a relatively large force must also be exerted on the stretcher. This makes it necessary for a stretcher to be moved by at least two persons when moving the stretcher into or out of the ambulance.

The aim of the present invention is to provide a wheeled carrying structure that is movable relatively easily between a lower floor surface and a loading area at a higher level and wherein the operation of a locking device of the carrying structure requires less or no attention at the time of moving between the lower floor surface and the higher loading area.

For this purpose, the invention provides a wheeled carrying structure with collapsible undercarriage comprising the features of claim 1.

The wheeled carrying structure according to the present invention has the advantage that the movement of the third run-in wheel axle results in a wheel located in front of the carrying frame with which the carrying structure can be moved easily onto the higher loading platform (or with which it can be moved easily therefrom). A further advantage is that during movement of the carrying structure over the floor surface at the lower level, the at least one run-in wheel does not stick out; the carrying structure is thus relatively compact during "mobile use". A further advantage of folding-in the at least one run-in wheel is that this makes it possible to use larger run-in wheels, which greatly increases the ease of use. The wheel axles may be positioned parallel to each other but it is also conceivable for the wheels to be connected to the individual legs as castors.

In a variant embodiment, the assembly of the third run-in wheel axle and the associated third leg is provided with locking means for the locking of the first supporting wheel axle in a folded-out position - located at a distance from the carrying frame - in the folded-in position - located under the carrying frame - of the third run-in wheel axle, and for releasing the first supporting wheel axle in the folded-out - located in front of the carrying frame - position of the third wheel axle. Moving the at least one run-in wheel therefore results "automatically" in the locking or unlocking of at least one part of the folded-out support of the carrying structure. Uncoupling or coupling no longer needs to be carried out as a separate operation; this is not only advantageous from the ergonomic standpoint, it also means that the unwanted decoupling of a folded-out carrying structure (and less importantly an unwanted coupling of the carrying structure) will occur less easily.

In a variant embodiment, the side facing the carrying frame of the first lockable swivelling leg supporting the first supporting wheel axle grips in a folded-out and locked state - located at a distance from the carrying frame of the first supporting wheel axle - for fixing the carrying frame in a holding opening. This represents a constructionally very simple solution with which a solid locking of the first leg in the folded-out state is nevertheless possible. In addition, this solution makes it possible to perform decoupling simply by lifting up the carrying structure over a limited distance. With a correct choice of dimensions in a particular usage situation, on placing the run-in wheels on a loading platform at a higher level, the carrying structure will have to be raised somewhat on further movement so that a first lockable swivelling leg is undone.

In yet another variant embodiment, the first lockable swivelling leg supporting the first supporting wheel axle is coupled to locking means of the second leg supporting the second supporting wheel axle wherein by moving the first lockable swivelling leg to a folded-in state wherein the first supporting wheel axle is located at a short distance from the carrying frame, the locking means of the second leg supporting the second supporting wheel axle are unlocked. Once again, this technical measure leads to an increase in the ease of use. Through the successive decoupling of the first and second leg, a supporting leg is only decoupled when necessary (and not before). Besides simplified operation, this also gives more certainty that the decoupling does not take place too early.

For simplified operation, it is further desirable that the carrying structure is provided with at least one handle for moving the wheeled carrying structure in the mobile position of the supporting legs. It should be borne in mind that the wheeled carrying structure has many more applications then just supporting a stretcher. Think for example of all kinds of support-service wheeled trucks and carts which must be easily movable with a lorry, transport bus or other means of transport provided with a loading area. Individual, non-limiting examples are the trucks of postal delivery personnel, maintenance engineers, deliverers of supplies for vending machines, salesmen and so on. Moreover, during use it would be even easier if the at least one handle is provided with a brake control that interacts with a brake applied on the wheels of at least one of the wheels of the supporting wheel axles.

A solid construction for unlocking is achieved if the assembly of the third leg and the third run-in wheel axle is coupled to a wedge-shaped uncoupling element through movement whereof locking of the leg of the first supporting wheel axle is operable. By simple movement of the wedge-shaped structure, for example a locking pin that is under spring tension is pushed aside.

As already stated above, the run-in wheel axle that is pivotable aside makes it possible to fit larger wheels there, which however are not troublesome during mobile use of the carrying structure. Larger wheels mean easier movement. In the present situation it is possible to use a wheel carried by the third run-in wheel axle with a diameter of at least 150 mm, preferably at least a diameter of at least 200 mm.

Further ease of use may be obtained if a wheel of at least one of the supporting wheel axles is provided with an electric drive.

For various uses it is advantageous for the wheeled carrying structure to be provided with at least one holder on the side turned away from the supporting wheel axles. Said holder or cup may also be of detachable configuration.

The present invention also provides a method for moving a wheeled carrying structure according to one of the preceding claims from a lower onto a higher base, comprising the operation steps: A) moving the run-in wheel axle and the leg supporting the run-in wheel axle from a collapsed position located under the carrying frame of the third run-in wheel axle to a folded-out run-in position located in front of the carrying frame, with the result that the folded-out - located at a distance from the carrying frame - first supporting wheel axle and the leg supporting the first supporting wheel axle are unlocked; B) moving the at least one wheel carried by the third run-in wheel axle onto the higher base; C) moving the carrying structure further onto the higher base over the at least one wheel carried by the third run-in wheel axle; D) moving the assembly of the first leg and first supporting wheel axle through contact of the higher base with the assembly of the first leg and first supporting wheel axle from the folded-out position unlocked by the run-in wheel to a collapsed position; and E) through contact of the higher base with the assembly of the second leg and second supporting wheel axle from the by the assembly; moving the assembly of the second leg and second supporting wheel axle from an unlocked folded-out position of a first leg a first supporting wheel axle to a collapsed position. When this method is used, on moving onto a higher base (for example with the carrying structure travelling in a vehicle), the advantages as already described above on the basis of the device according to the present invention are achieved. These advantages are also achieved here - by reference - regarding the method according to the present invention.

If, during movement of the at least one wheel carried by the third run-in wheel axle onto the higher base according to operation step B), the carrying frame is raised at least at the level of engagement of the first leg, the first leg can automatically be released from locking, which provides a further simplification of use.

Besides movement from a lower to a higher base the invention also provides the method in reverse: moving a wheeled carrying structure according to one of the preceding claims from a higher to a lower base. Said method comprises the operation steps: U) with the carrying frame located on a higher base in a folded-in state of the first and second legs, moving the carrying structure from the higher base to a lower base over at least one folded-out run-in wheel carried by the third run-in wheel axle; V) by folding-out the assembly of second leg and second supporting axle from a folded-in state, releasing the at least one wheel held by the second supporting wheel axle from the higher base; W) by releasing the higher base of the at least one wheel held by the first supporting wheel axle from a folded-in state, folding-out the assembly of first leg and first supporting wheel axle, as a result of which the assembly of the second leg and the second supporting axle is locked in the folded-out state; X) from a folded-out run-in position of the third run-in wheel axle located in front of the carrying frame moving the run-in wheel axle and the leg supporting the run-in wheel axle to a collapsed position located under the carrying frame of the third run-in wheel axle, with the result that the assembly of the first leg and the first supporting wheel axle are locked in the folded-out state. Reference is also made for this method to the advantages already mentioned above of the device according to the present method.

The invention will be explained in more detail on the basis of the non-limiting variant embodiment shown in the following figures. These show:
Fig. 1: a side view of the wheeled carrying structure in a state movable on a lower base;
Fig. 2: a side view of the wheeled carrying structure from Fig. 1 in a state placed on a higher base; and
Fig. 3: a side view of the wheeled carrying structure from Figs. 1 and 2 wherein the movement of the wheel axles is explained.

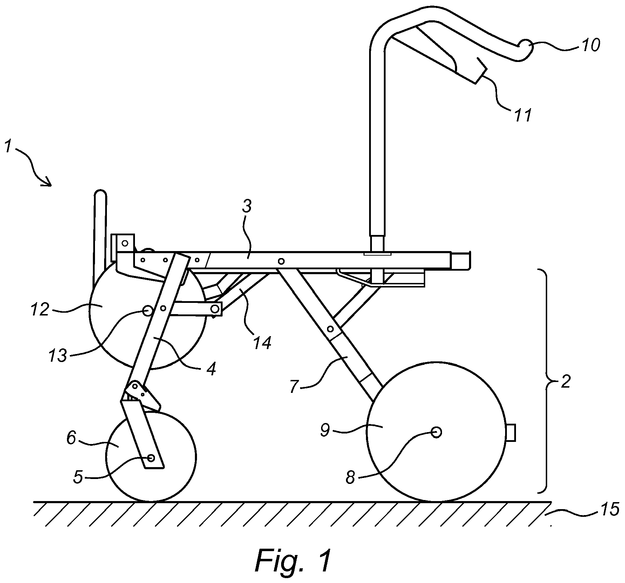

Fig. 1 shows a wheeled carrying structure 1 with a collapsible undercarriage 2. A carrying frame 3 is supported by a first leg 4 to which a first wheel axle 5 with a wheel 6 is fixed and by a second leg 7 to which a second wheel axle 8 with a wheel 9 is fixed. The wheeled carrying structure 1 (or cart) is further provided with a handle 10 with a brake handle 11. The wheeled carrying structure 1 can be operated by gripping the handle 10 and then pushing the carrying structure 1 in a desired direction. The wheels 6, 9 may also optionally be configured as castors. A run-in wheel 12 with wheel axle 13 and third leg 14 can also be seen, which in the state shown is folded under the carrying frame 3, where at that moment it fulfils no function other than that by this position of the run-in wheel 12, the first leg 4 is locked in the position shown carried by the ground 15. The position of the first leg 4 in its turn locks the position of the second leg 7 in the state shown. Thus, in the situation as shown in Fig. 1, the undercarriage 2 cannot be collapsed.

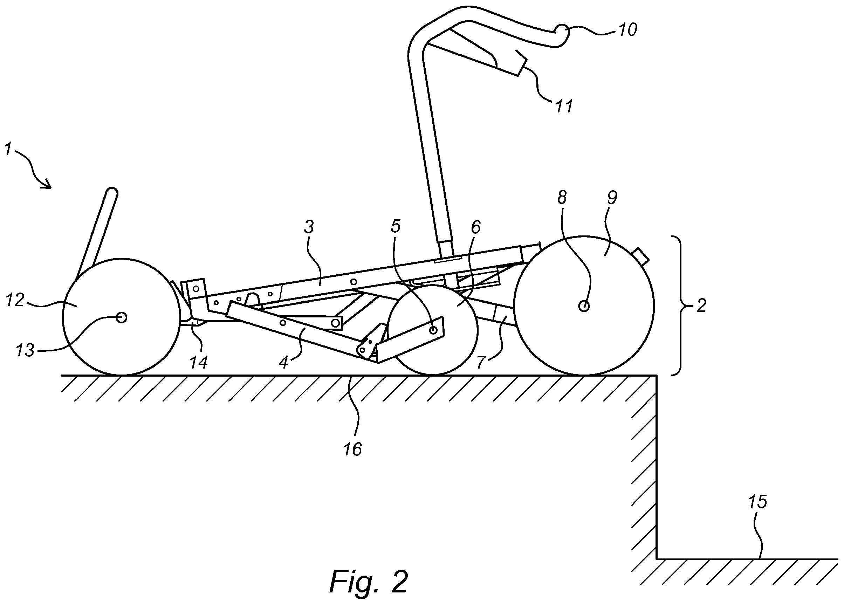

In Fig. 2, the undercarriage 2 of the wheeled carrying structure 1 is collapsed and the carrying structure 1 is positioned on a (loading) platform 16 located higher than the ground 15. Differing from the state shown in Fig. 1, in Fig. 2 the run-in wheel 12 with wheel axle 13 is moved to in front of the carrying frame 3 by swivelling the third leg 14. Through the movement of the third leg 14, the first leg 4 is unlocked and - together with the first wheel axle 5 with the wheel 6 - it can be swivelled backwards, with the result that the wheel 6 is located in a position at a short distance from the carrying frame 3. The movement of the first leg 4 has again made it possible for the second leg 7 (together with the second wheel axle 8 and wheel 9) also to be swivelled backwards. Now by folding-out the run-in wheel 12 and placing it on the loading platform 16 the undercarriage 2 of the wheeled carrying structure 1 can then simply be pushed by this against the edge of the higher loading platform 16 to be unlocked and collapsed without further operations being required.

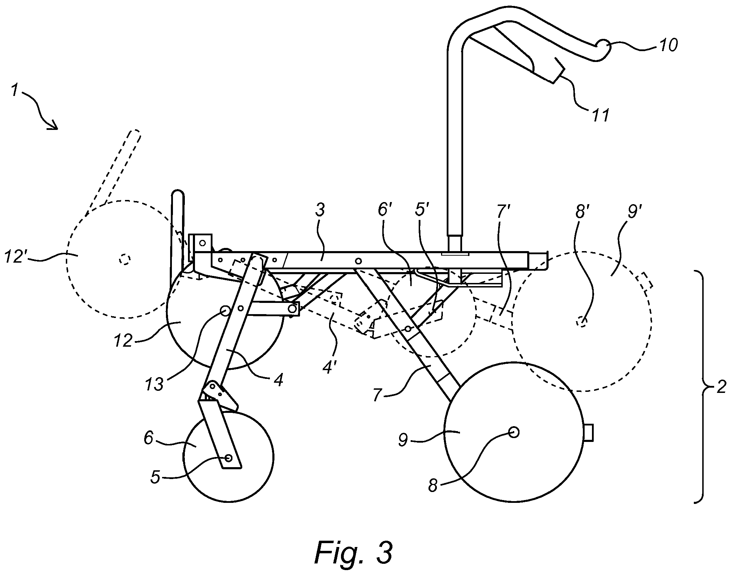

In Fig. 3, the two extreme states between which the undercarriage 2 of the carrying structure 1 is movable (and as shown in Figs. 1 and 2) are shown in a single figure. In the state shown in bold, the first leg 4, the first wheel axle 5, the wheel 6, the second leg 7, the wheel axle 8 and the wheel 9 are moved into the folded-out state. Because the run-in wheel 12 is in the locking state (under carrying frame 3), the folded-out undercarriage 2 cannot be collapsed. After the run-in wheel 12' has been moved to the state shown with the dashed line, the first leg 4', the first wheel axle 5', the wheel 6', the second leg 7', the wheel axle 8' and the wheel 9' can then be collapsed.

## Claims

1. Wheeled carrying structure (1) with collapsible undercarriage (2) comprising:
- a carrying frame (3);
- two supporting wheel axles (5, 8); both provided with at least one wheel (6, 9), said wheel axles (5, 8) with lockable swivelling legs (4, 7) being connected to the carrying frame (3) for moving the supporting wheel axles (5, 8) between a mobile position at a distance from the carrying frame (3) and a collapsed position located near the carrying frame (3); and **characterized by**
- a third run-in wheel axle (13) provided with at least one wheel (12), said third run-in wheel axle (13), with at least one swivelling third leg (14), also being connected to the carrying frame (3);
wherein the third run-in wheel axle (13) is movable from a folded-out run-in position located essentially in front of the carrying frame (3) to a folded-in position located under the carrying frame (3).

2. Wheeled carrying structure (1) according to Claim 1, **characterized in that** the assembly of the third run-in wheel axle (13) and the associated third leg (14) is provided with locking means for:
the locking, in the folded-in position - located under the carrying frame (3) - of the third run-in wheel axle (13), of the first supporting wheel axle (5) in a folded-out position - located at a distance from the carrying frame (3) -, and for
the releasing of the first supporting wheel axle (5) in the folded-out - located in front of the carrying frame (3) - position of the third wheel axle (13).

3. Wheeled carrying structure (1) according to Claim 1 or 2, **characterized in that** the side facing the carrying frame (3) of the first lockable swivelling leg (4) supporting the first supporting wheel axle (5) in a folded-out and locked - state of the first supporting wheel axle (5) located at a distance from the carrying frame (3) - grips for fixing the carrying frame (3) in a holding opening.

4. Wheeled carrying structure (1) according to Claim 3, **characterized in that** the side facing the carrying frame (3) of the first lockable swivelling leg (4) supporting the first supporting wheel axle (5) may be undone for unlocking by at least locally raising the carrying frame (3) from the holding opening, said unlocking of the first swivelling leg (4) only being possible if the third wheel axle (13) is in the run-in position located in front of the carrying frame (3).

5. Wheeled carrying structure (1) according to one of the preceding claims, **characterized in that** the first lockable swivelling leg (4) supporting the first supporting wheel axle (5) is coupled to locking means of the second leg (7) supporting the second supporting wheel axle (8) wherein by moving the first lockable swivelling leg (4) to a folded-in state wherein the first supporting wheel axle (5) is located at a short distance from the carrying frame (3) the locking means of the second leg (7) supporting the second supporting wheel axle (8) are unlocked.

6. Wheeled carrying structure (1) according to one of the preceding claims, **characterized in that** the carrying structure (1) is provided with at least one handle (10) for moving the wheeled carrying structure (1) into the mobile position of the supporting legs.

7. Wheeled carrying structure (1) according to Claim 6, **characterized in that** the at least one handle (10) is provided with a brake control (11) that interacts with a brake that acts upon the wheels (6, 9) of at least one of the wheels (6, 9) of the supporting wheel axles (5, 8).

8. Wheeled carrying structure (1) according to one of the preceding claims, **characterized in that** the assembly of the third leg (14) and the third run-in wheel axle (13) is coupled to a wedge-shaped uncoupling element, through movement of which the locking of the leg of the first supporting wheel axle (5) is operable.

9. Wheeled carrying structure (1) according to one of the preceding claims, **characterized in that** the at least one wheel (12) carried by the third run-in wheel axle (13) has a diameter of at least 150 mm, preferably at least a diameter of at least 200 mm.

10. Wheeled carrying structure (1) according to one of the preceding claims, **characterized in that** a wheel (6, 9) of at least one of the supporting wheel axles (5, 8) is provided with an electric drive.

11. Wheeled carrying structure (1) according to one of the preceding claims, **characterized in that** the wheeled carrying structure (1) is provided with at least one holder on the side turned away from the supporting wheel axles (5, 8).

12. Method for moving a wheeled carrying structure (1) according to one of the preceding claims from a lower onto a higher base, comprising the operation steps:
A) moving the run-in wheel axle (5) and the leg supporting the run-in wheel axle (5) from a collapsed position located under the carrying frame (3) of the third run-in wheel axle (13) to a folded-out run-in position located in front of the carrying frame (3), with the result that the folded-out - located at a distance from the carrying frame (3) - first supporting wheel axle (5) and the leg (4) supporting the first supporting wheel axle (5) are unlocked;
B) moving the at least one wheel (12) carried by the third run-in wheel axle (13) onto the higher base;
C) moving the carrying structure (1) further onto the higher base over the at least one wheel (12) carried by the third run-in wheel axle (13);
D) moving the assembly of the first leg (4) and first supporting wheel axle (5) through contact of the higher base with the assembly of the first leg (4) and first supporting wheel axle (5) from the folded-out position unlocked by the run-in wheel (12) to a collapsed position; and
E) through contact of the higher base with the assembly of the second leg (7) and second supporting wheel axle (8) through the assembly; moving the assembly of the second leg (7) and second supporting wheel axle (8) from first leg (4) a first supporting wheel axle (5) unlocked folded-out position to a collapsed position.

13. Method according to Claim 12, **characterized in that** by moving the at least one wheel (12) carried by the third run-in wheel axle (13) onto the higher base, according to operation step B), the carrying frame (3) at least at the level of the engagement of the first leg (4) is raised so that the first leg (4) is released from a locking.

14. Method for moving a wheeled carrying structure (1) according to one of the preceding claims from a higher to a lower base, comprising the operation steps:
U) moving the carrying frame (3) from the carrying structure (1) located on a higher base in a folded-in state of the first and second legs (7) over at least one folded-out run-in wheel (12) carried by the third run-in wheel axle (13) from the higher base to a lower base;
V) folding-out the assembly of second leg (7) and second supporting axle (8) from a folded-in state, releasing the at least one wheel (9) held by the second supporting wheel axle (8) from the higher base;
W) releasing the higher base of the at least one wheel (6) held by the first supporting wheel axle (5) from a folded-in state, folding-out the assembly of first leg (4) and first supporting wheel axle (5), as a result of which the assembly of the second leg (7) and the second supporting axle (8) is locked in the folded-out state;
X) moving the run-in wheel axle (13) and the leg (14) supporting the run-in wheel axle (13) from a folded-out run-in position of the third run-in wheel axle (13) located in front of the carrying frame (3) to a collapsed position located under the carrying frame (3) of the third run-in wheel axle (13), with the result that the assembly of the first leg (4) and the first supporting wheel axle (5) are locked in the folded-out state.

15. Method according to one of Claims 12-14, **characterized in that** the wheeled carrying structure (1) according to Claims 1-11 is moved between a loading platform (16) at a higher level of a vehicle, for example such as a lorry or transport bus, and a floor surface.

## Patentansprüche

1. Tragestruktur (1) auf Rädern mit zusammenklappbarem Unterboden (2), umfassend:
- einen Tragerahmen (3),
- zwei stützende Radachsen (5, 8), die beide mit mindestens einem Rad (6, 9) versehen sind, wobei die Radachsen (5, 8) mit arretierbaren Schwenkbeinen (4, 7) mit dem Tragerahmen (3) verbunden sind, um die stützenden Radachsen (5, 8) zwischen einer beweglichen Position von dem Tragerahmen (3) beabstandet und einer zusammengeklappten Position in der Nähe des Tragerahmens (3) zu bewegen, **gekennzeichnet durch**
- eine dritte Einlaufradachse (13), die mit mindestens einem Rad (12) versehen ist, wobei die dritte Einlaufradachse (13) mit mindestens einem schwenkenden dritten Bein (14) ebenfalls mit dem Tragerahmen (3) verbunden ist, wobei die dritte Einlaufradachse (13) aus einer ausgeklappten Einlaufposition, die sich im Wesentlichen vor dem Tragerahmen (3) befindet, in eine eingeklappte Position, die sich unter dem Tragerahmen (3) befindet, bewegbar ist.

2. Tragestruktur (1) auf Rädern nach Anspruch 1, **dadurch gekennzeichnet, dass** die Anordnung aus der dritten Einlaufradachse (13) und dem zugeordneten dritten Bein (14) mit Arretierungsmitteln für Folgendes versehen ist:
das Arretieren der dritten Einlaufradachse (13) in der eingeklappten Position - unter dem Tragerahmen (3) angeordnet - , der ersten stützenden Radachse (5) in einer ausgeklappten Position - in einem Abstand von dem Tragerahmen (3) angeordnet - und für
die Freigabe der ersten stützenden Radachse (5) in der ausgeklappten Position - vor dem Tragerahmen (3) angeordnet - der dritten Radachse (13).

3. Tragestruktur (1) auf Rädern nach Anspruch 1 oder 2, **dadurch gekennzeichnet, dass** die dem Tragerahmen (3) zugewandte Seite des ersten arretierbaren schwenkenden Beins (4), das die erste stützende Radachse (5) stützt, in einem ausgeklappten und arretierten Zustand der ersten stützenden Radachse (5) - in einem Abstand von dem Tragerahmen (3) angeordnet - greift, um den Tragerahmen (3) in einer Halteöffnung zu befestigen.

4. Tragestruktur (1) auf Rädern nach Anspruch 3, **dadurch gekennzeichnet, dass** die dem Tragerahmen (3) zugewandte Seite des ersten arretierbaren schwenkenden Beins (4), das die erste stützende Radachse (5) stützt, für das Entriegeln gelöst werden kann, indem mindestens örtlich der Tragerahmen (3) aus der Halteöffnung angehoben wird, wobei das Entriegeln des ersten schwenkenden Beins (4) nur möglich ist, wenn die dritte Radachse (13) in der Einlaufposition ist, die vor dem Tragerahmen (3) angeordnet ist.

5. Tragestruktur (1) auf Rädern nach einem der vorhergehenden Ansprüche, **dadurch gekennzeichnet, dass** das erste arretierbare schwenkende Bein (4), das die erste stützende Radachse (5) stützt, an Arretierungsmittel des zweiten Beins (7) gekoppelt ist, das die zweite stützende Radachse (8) stützt, wobei die Arretierungsmittel des zweiten Beins (7), das die zweite stützende Radachse (8) stützt, entriegelt werden, indem das erste arretierbare schwenkende Bein (4) in einen eingeklappten Zustand bewegt wird, in dem die erste stützende Radachse (5) in einem geringen Abstand von dem Tragerahmen (3) angeordnet ist.

6. Tragestruktur (1) auf Rädern nach einem der vorhergehenden Ansprüche, **dadurch gekennzeichnet, dass** die Tragestruktur (1) mit mindestens einem Griff (10) versehen ist, um die Tragestruktur (1) auf Rädern in die bewegliche Position der Stützbeine zu bewegen.

7. Tragestruktur (1) auf Rädern nach Anspruch 6, **dadurch gekennzeichnet, dass** der mindestens eine Griff (10) mit einer Bremssteuerung (11) versehen ist, die mit einer Bremse zusammenwirkt, die auf die Räder (6, 9) mindestens eines der Räder (6, 9) der stützenden Räderachsen (5, 8) wirkt.

8. Tragestruktur (1) auf Rädern nach einem der vorhergehenden Ansprüche, **dadurch gekennzeichnet, dass** die Anordnung aus dem dritten Bein (14) und der dritten Einlaufradachse (13) an ein keilförmiges Entkoppelelement gekoppelt ist, durch dessen Bewegung die Arretierung des Beins der ersten stützenden Radachse (5) betätigbar ist.

9. Tragestruktur (1) auf Rädern nach einem der vorhergehenden Ansprüche, **dadurch gekennzeichnet, dass** das mindestens eine von der dritten Einlaufradachse (13) getragene Rad (12) einen Durchmesser von mindestens 150 mm, vorzugsweise mindestens einen Durchmesser von mindestens 200 mm, hat.

10. Tragestruktur (1) auf Rädern nach einem der vorhergehenden Ansprüche, **dadurch gekennzeichnet, dass** ein Rad (6, 9) mindestens einer der stützenden Radachsen (5, 8) mit einem Elektroantrieb versehen ist.

11. Tragestruktur (1) auf Rädern nach einem der vorhergehenden Ansprüche, **dadurch gekennzeichnet, dass** die Tragestruktur (1) auf Rädern mit mindestens einem Halter an der von den stützenden Radachsen (5, 8) weg gewandten Seite versehen ist.

12. Verfahren zum Bewegen einer Tragestruktur (1) auf Rädern nach einem der vorhergehenden Ansprüche von einer niedrigeren auf eine höhere Basis, umfassend die folgenden Betriebsschritte:
A) Bewegen der Einlaufradachse (5) und des die Einlaufradachse (5) stützenden Beins aus einer zusammengeklappten Position, die unter dem Tragerahmen (3) der dritten Einlaufradachse (13) angeordnet ist, in eine ausgeklappte Einlaufposition, die vor dem Tragerahmen (3) angeordnet ist, so dass die ausgeklappte und in einem Abstand von dem Tragerahmen (3) angeordnete erste stützende Radachse (5) und das die erste stützende Radachse (5) stützende Bein (4) entriegelt werden,
B) Bewegen des von der dritten Einlaufradachse (13) getragenen mindestens einen Rads (12) auf die höhere Basis,
C) Bewegen der Tragestruktur (1) höher auf die höhere Basis über das von der dritten Einlaufradachse (13) getragene mindestens eine Rad (12),
D) Bewegen der Anordnung aus dem ersten Bein (4) und der ersten stützenden Radachse (5) durch Kontakt der höheren Basis mit der Anordnung aus dem ersten Bein (4) und der ersten stützenden Radachse (5) aus der durch das Einlaufrad (12) entriegelten ausgeklappten Position in eine zusammengeklappte Position und
E) durch Kontakt der höheren Basis mit der Anordnung aus dem zweiten Bein (7) und der zweiten stützenden Radachse (8) durch die Anordnung, Bewegen der Anordnung aus dem zweiten Bein (7) und der zweiten stützenden Radachse (8) von erstes Bein (4) eine erste stützende Radachse (5) entriegelte ausgeklappte Position zu einer zusammengeklappten Position.

13. Verfahren nach Anspruch 12, **dadurch gekennzeichnet, dass** durch Bewegen des mindestens einen Rads (12), das von der dritten Einlaufradachse (13) getragen wird, auf die höhere Basis nach Betriebsschritt B) der Tragerahmen (3) mindestens auf der Höhe des Eingriffs des ersten Beins (4) angehoben wird, so dass das erste Bein (4) aus einer Arretierung freigegeben wird.

14. Verfahren zum Bewegen einer Tragestruktur (1) auf Rädern nach einem der vorhergehenden Ansprüche von einer höheren zu einer niedrigeren Basis, umfassend die folgenden Betriebsschritte:
U) Bewegen der Tragerahmen (3) der Tragestruktur (1) der auf einer höheren Basis in einem eingeklappten Zustand des ersten und des zweiten Beins (7) angeordnet ist, über mindestens ein ausgeklapptes Einlaufrad (12), das von der dritten Einlaufradachse (13) getragen wird, von der höheren Basis zu einer niedrigeren Basis,
V) Ausklappen der Anordnung aus dem zweiten Bein (7) und der zweiten Stützachse (8) aus einem eingeklappten Zustand, Freigeben des mindestens einen Rads (9), das von der zweiten stützenden Radachse (8) gehalten wird, von der höheren Basis,
W) Freigeben der höheren Basis des mindestens einen Rads (6), das von der ersten stützenden Radachse (5) gehalten wird, aus einem eingeklappten Zustand, Ausklappen der Anordnung aus dem ersten Bein (4) und der ersten stützenden Radachse (5), wodurch die Anordnung aus dem zweiten Bein (7) und der zweiten Stützachse (8) in dem ausgeklappten Zustand arretiert wird,
X) Bewegen der Einlaufradachse (13) und des die Einlaufradachse (13) stützenden Beins (14) aus einer eingeklappten Einlaufposition der dritten Einlaufradachse (13), die vor dem Tragerahmen (3) angeordnet ist, in eine zusammengeklappten Position, die unter dem Tragerahmen (3) der dritten Einlaufradachse (13) angeordnet ist, wodurch die Anordnung aus dem ersten Bein (4) und der ersten stützenden Radachse (5) in dem ausgeklappten Zustand arretiert werden.

15. Verfahren nach einem der Ansprüche 12 - 14, **dadurch gekennzeichnet, dass** die Tragestruktur (1) auf Rädern nach Ansprüchen 1 - 11 zwischen einer Ladeplattform (16) auf einer höheren Ebene eines Fahrzeugs, beispielsweise eines Lastkraftwagens oder Transportbusses, und einer Fußbodenfläche bewegt wird.

## Revendications

1. Structure porteuse à roues (1) avec châssis de roulement escamotable (2) comprenant :
- un cadre porteur (3) ;
- deux essieux de roue de support (5, 8) ; les deux étant pourvus d'au moins une roue (6, 9), lesdits essieux de roue (5, 8), avec des pattes pivotantes verrouillables (4, 7), étant reliés au cadre porteur (3) pour déplacer les essieux de roue de support (5, 8) entre une position mobile, à une distance du cadre porteur (3), et une position escamotée, située près du cadre porteur (3) ; et **caractérisée par**
- un troisième essieu de roue d'introduction (13) pourvu d'au moins une roue (12), ledit troisième essieu de roue d'introduction (13), avec au moins une troisième patte pivotante (14), étant également relié au cadre porteur (3) ;
dans laquelle le troisième essieu de roue d'introduction (13) est mobile depuis une position d'introduction dépliée située essentiellement devant le cadre porteur (3) jusqu'à une position repliée située sous le cadre porteur (3).

2. Structure porteuse à roues (1) selon la revendication 1, **caractérisée en ce que** l'ensemble du troisième essieu de roue d'introduction (13) et de la troisième patte associée (14) est pourvu de moyens de verrouillage pour :
le verrouillage, dans la position repliée - située sous le cadre porteur (3) - du troisième essieu de roue d'introduction (13), du premier essieu de roue de support (5) dans une position dépliée - située à une distance du cadre porteur (3) -, et pour la libération du premier essieu de roue de support (5) dans la position dépliée - située devant le cadre porteur (3) - du troisième essieu de roue (13).

3. Structure porteuse à roues (1) selon la revendication 1 ou 2, **caractérisée en ce que** le côté faisant face au cadre porteur (3) de la première patte pivotante verrouillable (4) supportant le premier essieu de roue de support (5) dans un état déplié et verrouillé du premier essieu de roue de support (5) situé à une distance du cadre porteur (3) entre en prise pour fixer le cadre porteur (3) dans une ouverture de maintien.

4. Structure porteuse à roues (1) selon la revendication 3, **caractérisée en ce que** le côté faisant face au cadre porteur (3) de la première patte pivotante verrouillable (4) supportant le premier essieu de roue de support (5) peut être défait pour un déverrouillage en relevant au moins localement le cadre porteur (3) à partir de l'ouverture de maintien, ledit déverrouillage de la première patte pivotante (4) étant seulement possible si le troisième essieu de roue (13) est dans la position d'introduction située devant le cadre porteur (3).

5. Structure porteuse à roues (1) selon l'une des revendications précédentes, **caractérisée en ce que** la première patte pivotante verrouillable (4) supportant le premier essieu de roue de support (5) est couplée à des moyens de verrouillage de la deuxième patte (7) supportant le second essieu de roue de support (8), dans laquelle, en déplaçant la première patte pivotante verrouillable (4) jusqu'à un état replié, dans lequel le premier essieu de roue de support (5) est situé à une courte distance du cadre porteur (3), les moyens de verrouillage de la deuxième patte (7) supportant le second essieu de roue de support (8) sont déverrouillés.

6. Structure porteuse à roues (1) selon l'une des revendications précédentes, **caractérisée en ce que** la structure porteuse (1) est pourvue d'au moins une poignée (10) pour déplacer la structure porteuse à roues (1) dans la position mobile des pattes de support.

7. Structure porteuse à roues (1) selon la revendication 6, **caractérisée en ce que** l'au moins une poignée (10) est pourvue d'une commande de frein (11) qui interagit avec un frein qui agit sur les roues (6, 9) d'au moins une des roues (6, 9) des essieux de roue de support (5, 8).

8. Structure porteuse à roues (1) selon l'une des revendications précédentes, **caractérisée en ce que** l'ensemble de la troisième patte (14) et du troisième essieu de roue d'introduction (13) est couplé à un élément de découplage en forme de cale, par le biais du mouvement duquel le verrouillage de la patte du premier essieu de roue de support (5) est réalisable.

9. Structure porteuse à roues (1) selon l'une des revendications précédentes, **caractérisée en ce que** l'au moins une roue (12) portée par le troisième essieu de roue d'introduction (13) a un diamètre d'au moins 150 mm, de préférence au moins un diamètre d'au moins 200 mm.

10. Structure porteuse à roues (1) selon l'une des revendications précédentes, **caractérisée en ce qu'une** roue (6, 9) d'au moins un des essieux de roue de support (5, 8) est pourvue d'un entraînement électrique.

11. Structure porteuse à roues (1) selon l'une des revendications précédentes, **caractérisée en ce que** la structure porteuse à roues (1) est pourvue d'au moins un élément de retenue sur le côté tourné à l'opposé des essieux de roue de support (5, 8).

12. Procédé pour déplacer une structure porteuse à roues (1) selon l'une des revendications précédentes, depuis une base plus basse jusqu'à une base plus haute, comprenant les étapes d'opération :
A) le déplacement de l'essieu de roue d'introduction (5) et de la patte supportant l'essieu de roue d'introduction (5) depuis une position escamotée située sous le cadre porteur (3) du troisième essieu de roue d'introduction (13) jusqu'à une position d'introduction dépliée située devant le cadre porteur (3), avec le résultat que le premier essieu de roue de support (5) déplié - situé à une distance du cadre porteur (3) - et la patte (4) supportant le premier essieu de roue de support (5) sont déverrouillés ;
B) le déplacement de l'au moins une roue (12) portée par le troisième essieu de roue d'introduction (13) sur la base plus haute ;
C) le déplacement de la structure porteuse (1), en outre, sur la base plus haute par-dessus l'au moins une roue (12) portée par le troisième essieu de roue d'introduction (13) ;
D) le déplacement de l'ensemble de la première patte (4) et du premier essieu de roue de support (5) par le biais de contact de la base plus haute avec l'ensemble de la première (4) et du premier essieu de roue de support (5) depuis la position dépliée déverrouillée par la roue d'introduction (12) jusqu'à une position escamotée ; et
E) par le biais de contact de la base plus haute avec l'ensemble de la deuxième patte (7) et du second essieu de roue de support (8) par le biais de l'ensemble ; le déplacement de l'ensemble de la deuxième patte (7) et du second essieu de roue de support (8) depuis la première patte (4) un premier essieu de roue de support (5) position dépliée déverrouillée jusqu'à une position escamotée.

13. Procédé selon la revendication 12, **caractérisé en ce que,** en déplaçant l'au moins une roue (12) portée par le troisième essieu de roue d'introduction (13) sur la base plus haute, selon l'étape d'opération B), le cadre porteur (3), au moins au niveau de l'entrée en prise de la première patte (4), est relevé pour que la première patte (4) soit libérée d'un verrouillage.

14. Procédé pour déplacer une structure porteuse à roues (1) selon l'une des revendications précédentes, depuis une base plus haute jusqu'à une base plus basse, comprenant les étapes d'opération :
U) déplacer le cadre porteur (3) de la structure porteuse (1) situé sur une base plus haute dans un état replié des première et deuxième pattes (7) par-dessus au moins une roue d'introduction dépliée (12) portée par le troisième essieu de roue d'introduction (13), depuis la base plus haute jusqu'à une base plus basse;
V) déplier l'ensemble de la deuxième patte (7) et du second essieu de support (8) depuis un état replié, la libération de l'au moins une roue (9) retenue par le second essieu de roue de support (8) à partir de la base plus haute;
W) libérer la base plus haute de l'au moins une roue (6) retenue par le premier essieu de roue de support (5) depuis un état replié, le dépliage de l'ensemble de la première patte (4) et du premier essieu de roue de support (5), en conséquence de quoi l'ensemble de la deuxième patte (7) et du second essieu de support (8) est verrouillé dans l'état déplié;
X) déplacer de l'essieu de roue d'introduction (13) et de la patte (14) supportant l'essieu de roue d'introduction (13) depuis une position d'introduction dépliée du troisième essieu de roue d'introduction (13), située devant le cadre porteur (3), jusqu'à une position escamotée, située sous le cadre porteur (3) du troisième essieu de roue d'introduction (13), avec le résultat que l'ensemble de la première patte (4) et du premier essieu de roue de support (5) est verrouillé dans l'état déplié.

15. Procédé selon l'une des revendications 12 à 14, **caractérisé en ce que** la structure porteuse à roues (1) selon les revendications 1 à 11 est déplacée entre une plate-forme de chargement (16) à un niveau plus haut d'un véhicule, par exemple tel qu'un camion ou bus de transport, et une surface de plancher.
